# EUROPEAN PATENT APPLICATION

(11) **EP 4 564 688 A1**
(43) Date of publication of application: **04.06.2025**
(21) Application number: 23846156.0
(22) Date of filing: 05.07.2023
(51) Int. Cl.: H04B 1/40, H04W 52/02, H04W 88/00

(54) **COMMUNICATION DEVICE, COMMUNICATION SYSTEM, COMMUNICATION METHOD, AND NON-TRANSITORY COMPUTER-READABLE MEDIUM**

(30) Priority: 26.07.2022 JP 2022118911
(71) Applicant: NEC Corporation, 108-8001 Tokyo (JP)
(72) Inventor: NAKATA Atsushi, Tokyo 108-8001 (JP)
(74) Representative: Mathys & Squire
(86) International application number: PCT/JP2023/024864
(87) International publication number: WO 2024/024423

(57) **Abstract**

An object is to provide a communication apparatus capable of enhancing a management function of a power state. A communication apparatus (10) according to the present disclosure includes a control unit (11) that determines an antenna element that operates in an energy saving mode among a plurality of antenna elements constituting at least one antenna array forming a desired radiation pattern in an RU apparatus, and a communication unit (12) that transmits, to the RU apparatus, configuration information indicating the antenna element that operates in the energy saving mode.

## Description

### Technical Field

The present disclosure relates to a communication apparatus, a communication system, and a communication method.

### Background Art

In recent years, a radio access network has been used in which a baseband unit and a radio unit of a base station are separated and the baseband unit and the radio unit are connected via a front hole. The open-radio access network (O-RAN) fronthaul specification defined by the O-RAN Alliance defines the specification of a fronthaul between an O-RU (radio unit) corresponding to the radio unit, and an O-DU (distributed unit) and an O-CU (central unit) corresponding to the baseband unit. One object of the O-RAN fronthaul specification is to facilitate connection with an O-RU of a vendor different from a vendor of an O-DU, and to realize multi-vendor of a radio access network.

In the O-RAN fronthaul, specifications related to a control (C)-plane, a user (U)-plane, a synchronization (S)-plane, and an M-plane are defined. Here, Non Patent Literature 1 mainly defines specifications related to a management-plane (M-Plane) in an O-RAN fronthaul. An outline of functions related to the M-Plane disclosed in Non Patent Literature 1 will be described below.

The M-Plane provides a management function for the O-RU.
Specifically, in the M-Plane, an O-DU or a network management system (NMS) is defined as a network device that manages an O-RU. Furthermore, in the M-Plane, a network configuration protocol (NETCONF), which is a protocol generally used in management of network devices, is defined. In NETCONF, a network device that manages an O-RU corresponds to a NETCONF client, and an O-RU as a management target corresponds to a NETCONF server.

Here, the M-Plane has a configuration management function. Specifically, the NETCONF client such as the O-DU retrieves, from the O-RU, the state of the apparatus, the functions on NETCONF with which the O-RU is compatible, and the like. Further, the NETCONF client sets a parameter to the O-RU. NETCONF defines edit-config for setting parameters and get-config for retrieving parameter values. The NETCONF client can modify the state of an apparatus (hardware) of the O-RU that can be set or changed, by using edit-config. Examples of the hardware state that can be set include a power state. By modifying the power state, it is possible to realize energy saving in the O-RU. Specifically, the NETCONF client causes the O-RU to transition to a state of awake or sleeping.

The state of awake is a state in which the O-RU performs a normal operation instead of an energy saving mode. On the other hand, the state of sleeping is a state in which the O-RU operates in the energy saving mode. In the state of sleeping, only the function related to the M-Plane can be operated, and the function related to the C/U/S-Plane can be stopped in order to suppress power consumption (see, for example, Section 9.1.3 of Non Patent Literature 1).

### Citation List

### Non Patent Literature

Non Patent Literature 1: O-RAN-WG4.MP.0-v09.00 O-RAN Working Group 4 (Open Fronthaul Interfaces WG) Management Plane Specification

### Summary of Invention

### Technical Problem

Non Patent Literature 1 discloses that the NETCONF client realizes power saving of an O-RU by transitioning the power state of the O-RU to awake or sleeping. Here, it is assumed that the number of installed O-RUs increases as the 5G (5th Generation) communication area expands in the future. Therefore, in the future, it is desired to further enhance the management function in order to efficiently manage the power state in the O-RU.

In view of the above-described problems, an object of the present disclosure is to provide a communication apparatus, a communication system, and a communication method capable of enhancing a management function of a power state.

### Solution to Problem

According to a first aspect of the present disclosure, a communication apparatus includes a control unit that determines an antenna element that operates in an energy saving mode among a plurality of antenna elements constituting at least one antenna array forming a desired radiation pattern in an RU apparatus; and a communication unit that transmits, to the RU apparatus, configuration information indicating the antenna element that operates in the energy saving mode.

According to a second aspect of the present disclosure, a communication system includes an RU apparatus having a plurality of antenna elements constituting at least one antenna array forming a desired radiation pattern; and a communication apparatus configured to determine an antenna element that operates in an energy saving mode among the plurality of antenna elements provided in the RU apparatus, and transmit, to the RU apparatus, configuration information indicating the antenna element that operates in the energy saving mode.

According to a third aspect of the present disclosure, a communication method includes determining an antenna element that operates in an energy saving mode among a plurality of antenna elements constituting at least one antenna array forming a desired radiation pattern in an RU apparatus; and transmitting, to the RU apparatus, configuration information indicating the antenna element that operates in the energy saving mode.

According to a fourth aspect of the present disclosure, a program causes a computer to execute determining an antenna element that operates in an energy saving mode among a plurality of antenna elements constituting at least one antenna array forming a desired radiation pattern in an RU apparatus; and transmitting, to the RU apparatus, configuration information indicating the antenna element that operates in the energy saving mode.

### Advantageous Effects of Invention

According to the present disclosure, it is possible to provide a communication apparatus, a communication system, and a communication method capable of enhancing a management function of a power state.

### Brief Description of Drawings

Fig. 1 is a configuration diagram of a communication apparatus according to a first example embodiment.
Fig. 2 is a diagram illustrating a communication method executed in the communication apparatus according to the first example embodiment.
Fig. 3 is a configuration diagram of a communication system according to a second example embodiment.
Fig. 4 is a diagram illustrating a flow of processing related to get-config included in NETCONF operations according to the second example embodiment.
Fig. 5 is a diagram illustrating a data model generated by an O-DU according to the second example embodiment.
Fig. 6 is a diagram illustrating a data model generated by the O-DU according to the second example embodiment.
Fig. 7 is a diagram illustrating a data model generated by the O-DU according to the second example embodiment.
Fig. 8 is a diagram illustrating a data model generated by the O-DU according to the second example embodiment.
Fig. 9 is a diagram illustrating a flow of processing related to get-edit included in the NETCONF operations according to the second example embodiment.
Fig. 10 is a configuration diagram of a communication apparatus according to each example embodiment.

### Example Embodiment

### (First Example Embodiment)

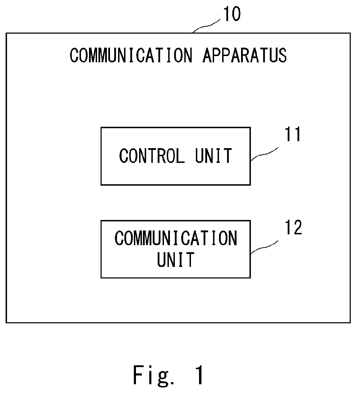

Hereinafter, example embodiments of the present invention will be described with reference to the drawings. A configuration example of a communication apparatus 10 according to a first example embodiment will be described with reference to Fig. 1. The communication apparatus 10 may be a software component or module whose processing is carried out by causing the processor to execute the program stored in the memory. The communication apparatus 10 may be, for example, a management apparatus or a controller that manages an O-RU node (referred to as an O-RU below) defined in the O-RAN Alliance, and may be referred to as an O-RU controller. The O-RU controller may be, for example, an O-DU node (referred to as an O-DU below) or a service management and orchestration (SMO) node (referred to as an SMO below). The O-RU and the O-DU may be simply referred to as an RU and a DU. A node may correspond to an entity (apparatus) or may correspond to a function (function).

The communication apparatus 10 includes a control unit 11 and a communication unit 12. The control unit 11 and the communication unit 12 may be software components or modules whose processing is carried out by causing the processor to execute the program stored in the memory. Alternatively, the control unit 11 and the communication unit 12 may be hardware components such as circuits or chips.

The control unit 11 determines an antenna element that operates in an energy saving mode among a plurality of antenna elements constituting at least one antenna array in the O-RU.

The O-RU has a radio communication interface, and is compatible with a wide bandwidth and enables more efficient communication, for example, by combining massive multiple input multiple output (MIMO) and a digital beam forming technology. Massive MIMO makes it possible to direct different beams to each of a plurality of users, for example, by arranging a plurality of antenna elements at equal intervals on a plane and electrically controlling each antenna element. As a result, it is possible to simultaneously connect a large number of users to the O-RU.

The antenna array is constituted by several antenna elements associated to form a desired radiation pattern in the O-RU. By configuring a plurality of antenna arrays by the O-RU, it is possible to realize various radiation patterns for beams radiated from the O-RU.

The energy saving mode may be, for example, an operation mode in which only some functions of the antenna element are operated and other functions are stopped. The energy saving mode may be, for example, bringing the antenna element into a state of sleeping defined by the O-RAN Alliance. Alternatively, the energy saving mode may be stopping power supply to the antenna element and stopping all functions of the antenna element. On the other hand, an operation mode in which the antenna element performs a normal operation without stopping some functions may be referred to as a normal mode.

The communication unit 12 transmits, to the O-RU, configuration information indicating the antenna element that operates in the energy saving mode. The configuration information may be, for example, information indicating whether or not to operate in the energy saving mode for each antenna element provided in the O-RU. Specifically, the configuration information may be information indicating whether to operate in the normal mode or the energy saving mode for each antenna element provided in the O-RU. Alternatively, the configuration information may be information indicating whether the antenna element constituting the corresponding antenna array operates in the energy saving mode or in the normal mode by indicating whether or not each antenna array operates in the energy saving mode. The O-RU controls an operation of the antenna element in accordance with the received configuration information. In other words, the O-RU changes the operation mode of the antenna element in accordance with the received configuration information.

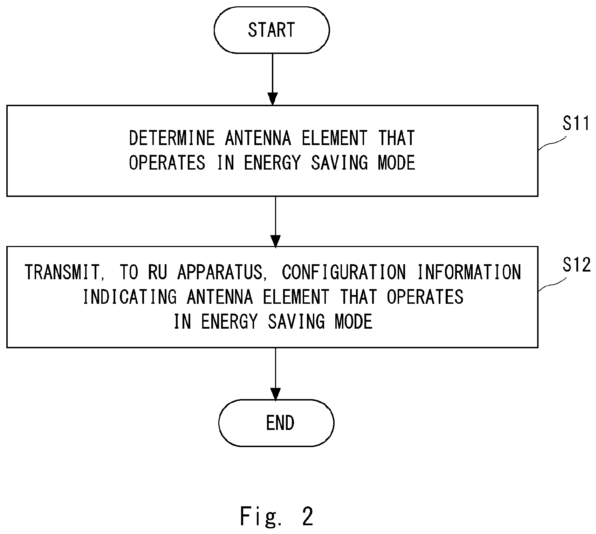

Next, a communication method executed in the communication apparatus 10 according to the first example embodiment will be described with reference to Fig. 2. First, the control unit 11 determines an antenna element that operates in the energy saving mode among a plurality of antenna elements constituting at least one antenna array forming a desired radiation pattern in the O-RU (S11). Then, the communication unit 12 transmits, to the O-RU, configuration information indicating the antenna element that operates in the energy saving mode (S12).

As described above, the communication apparatus 10 determines the antenna element that operates in the energy saving mode and notifies the O-RU of the determined antenna element. As a result, the communication apparatus 10 can change the antenna element that operates in the energy saving mode, and thus it is possible to flexibly control the power consumption of the O-RU in accordance with, for example, the communication status of the O-RU, the load status, the status of the battery capacity, and the like.

### (Second Example Embodiment)

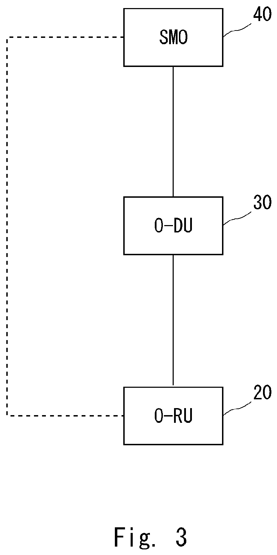

Next, a configuration example of a communication system according to a second example embodiment will be described with reference to Fig. 3. The communication system of Fig. 3 illustrates an M-Plane architecture model defined in the O-RAN Alliance. The communication system of Fig. 3 includes an O-RU 20, an O-DU 30, and an SMO 40. The O-DU 30 or the SMO 40 corresponds to the communication apparatus 10 of Fig. 1. In addition, the communication system may include an O-CU node and a near real-time RAN intelligent controller (Near-RT RIC) node (not illustrated). Furthermore, the SMO 40 may include a non real-time RAN intelligent controller (non-RT RIC) node (not illustrated). The O-CU may be simply referred to as a CU.

The O-RU 20 is a logical node that performs a lower function (PHY-Low) of a physical layer and radio frequency (RF) processing. Alternatively, the O-RU 20 may be a physical device on which an O-RU that is a logical node is mounted. The lower function of the physical layer may be, for example, fast Fourier transform (FFT)/inverse FFT (IFFT) processing, bea forming (BF) processing, and the like.

The O-DU 30 is a logical node that executes functions in a packet data convergence protocol (PDCP) layer, a radio link control (RLC) layer, and a media access control (MAC) layer, and further executes upper functions of a physical layer. Alternatively, the O-DU 30 may be a physical device on which an O-DU that is a logical node is mounted. The higher function of the physical layer may be, for example, encoding and modulation processing, decoding and demodulation processing, and the like. The function in the PDCP layer may be executed in a logical node referred to as a central unit (CU) (not illustrated).

The SMO 40 performs maintenance and orchestration (control) of a radio access network (RAN) and a RAN intelligent controller (RIC) which is a platform for realizing optimization of radio resource management and automation of operation. Fig. 3 illustrates a configuration in which the O-RU 20 and the O-DU 30 are connected and the O-DU 30 and the SMO 40 are connected. On the other hand, the O-RU 20 and the SMO 40 may be connected as illustrated using a dotted line in Fig. 3. In addition, Fig. 3 illustrates a one-to-one configuration of the O-RU 20, the O-DU 30, and the SMO 40. On the other hand, the O-RU 20 may be managed by a plurality of O-DUs 30. Further, the O-RU 20 may be managed by a plurality of SMOs 40. In addition, the SMO 40 may be replaced with an NMS.

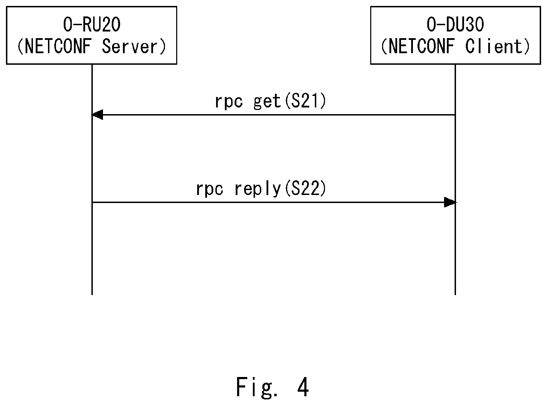

Next, a flow of processing related to get-config included in NETCONF operations performed in the Configuration Management function according to the second example embodiment will be described with reference to Fig. 4. In Fig. 4, the O-RU 20 operates as a NETCONF Server, and the O-DU 30 operates as a NETCONF Client. First, the O-DU 30 transmits a request message to the O-RU 20 (S21). For example, rpc (remote procedure call) get may be configured in the request message. Then, the O-RU 20 transmits a reply message to the request message to the O-DU 30 (S22). For example, rpc-reply may be configured in the reply message. The reply message in which rpc-reply is configured includes a parameter retained by the O-RU 20 and the state of the O-RU 20, as data. That is, the O-DU 30 retrieves the parameter retained by the O-RU 20, the state of the O-RU 20, and the like from the O-RU 20 by executing the get procedure.

The parameter retained by the O-RU 20 may be indicated, for example, in the form of a data model (YANG data model) described using YANG. In addition, a YANG data model indicating a parameter or a state of the O-RU 20 that can be changed by the O-DU 30 may be defined as a YANG module. Specifically, a YANG data model indicating a parameter or a state used in the M-Plane may be defined as a reusable YANG module.

For example, the O-DU 30 fetches, receives, or retrieves a list of tx-arrays and rx-arrays in o-ran-uplane-conf.yang from the O-RU 20, and determines, specifies, or extracts tx-array elements and rx-array elements. tx-arrays indicates the entire antenna array used for transmission, and rx-arrays indicates the entire antenna array used for reception. o-ran-uplane-conf.yang indicates the YANG module defined in the O-RAN Alliance. tx-array elements and rx-array elements may be antenna arrays configured in the O-RU 20. tx-array elements is an antenna array related to transmission at the O-RU 20, and rx-array elements is an antenna array related to reception at the O-RU 20.

Further, the O-DU 30 fetches, receives, or retrieves a list of static-low-level-tx-endpoints and static-low-level-rx-endpoints in o-ran-uplane-conf.yang from the O-RU 20. In addition, the O-DU 30 determines, specifies, or extracts static-low-level-tx-endpoint elements and static-low-level-rx-endpoint elements. The static-low-level-tx-endpoint elements are, for example, identification information of antenna elements related to transmission, and the static-low-level-rx-endpoint elements are, for example, identification information of antenna elements related to reception.

If the O-DU 30 determines the tx-array elements and the static-low-level-tx-endpoint element, the O-DU 30 examines the relationship between the tx-array elements and the static-low-level-tx-endpoint element. Further, if the O-DU 30 determines the rx-array elements and the static-low-level-rx-endpoint element, the O-DU 30 examines the relationship between the rx-array elements and the static-low-level-rx-endpoint element.

As a result of the examination, for example, the O-DU 30 may specify a static-low-level-tx-endpoint element indicating the antenna element constituting the tx-array element. Further, the O-DU 30 may specify a static-low-level-rx-endpoint element indicating an antenna element constituting the rx-array element.

Further, the O-DU 30 creates or generates a low-level-tx-endpoint element related to the static-low-level-tx-endpoint element, and creates or generates a low-level-rx-endpoint element related to the static-low-level-rx-endpoint element. The low-level-tx-endpoint element and the low-level-rx-endpoint element may be used, for example, to configure a desired parameter or state for the static-low-level-tx-endpoint element and the static-low-level-rx-endpoint element.

In addition, the O-DU 30 sets an extended antenna-carrier (eAxC) ID in the low-level-tx-endpoint element and the low-level-rx-endpoint. In a case where the O-DU 30 generates a plurality of low-level-tx-endpoint elements, the O-DU 30 sets an eAxC ID having a different value for each low-level-tx-endpoint element. Similarly, in a case where the O-DU 30 generates a plurality of low-level-rx-endpoint elements, the O-DU 30 sets an eAxC ID having a different value for each low-level-rx-endpoint element. The eAxC ID is a 16-bit value including DU_Port_ID, RU_Port_ID, CC_ID, and BandSector_ID.

Furthermore, the O-DU 30 generates a tx-array-carrier and an rx-array-carrier. The tx-array-carrier and the rx-array-carrier have "active" as a parameter, and any value of "ACTIVE", "INACTIVE", or "SLEEP" is set as the parameter "active". The O-DU 30 generates a low-level-tx-links element and a low-level-rx-link element in order to associate the values of the parameter "active" set for the tx-array-carrier and the rx-array-carrier with the low-level-tx-endpoint element and the low-level-rx-endpoint element. That is, the O-DU 30 associates the value of the parameter "active" set for the tx-array-carrier and the rx-array-carrier with the low-level-tx-endpoint element and the low-level-rx-endpoint element via the low-level-tx-links element and the low-level-rx-link element. The associating may be paraphrased as, for example, applying, setting, or the like.

For example, in a case where "ACTIVE" is set to the parameter "active", the antenna elements indicated by the static-low-level-tx-endpoint elements or the static-low-level-rx-endpoint elements may transition to the state of awake. In addition, in a case where "SLEEP" is set to the parameter "active", the antenna elements indicated by the static-low-level-tx-endpoint elements or the static-low-level-rx-endpoint elements may transition to the state of sleeping. Furthermore, in a case where "INACTIVE" is set to the parameter "active", all the functions of the antenna elements indicated by the static-low-level-tx-endpoint elements or the static-low-level-rx-endpoint elements may be stopped.

The O-DU 30 associates tx-array-carrier in which "SLEEP" is set to the parameter "active" with low-level-tx-endpoint elements associated with the antenna element to be transitioned to the state of sleeping. In addition, the O-DU 30 associates rx-array-carrier in which "SLEEP" is set to the parameter "active" with low-level-rx-endpoint elements associated with the antenna element to be transitioned to the state of sleeping.

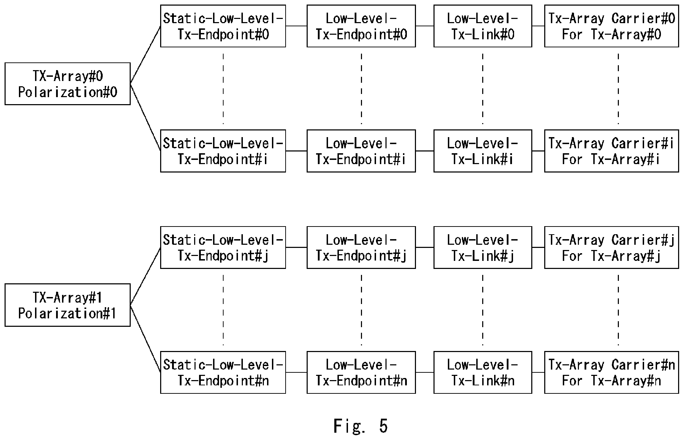

Here, a data model generated by the O-DU 30 based on the parameters retrieved from the O-RU 20 will be described with reference to Figs. 5 to 8.

Fig. 5 illustrates an example of a data model related to the antenna array on the transmission side in the O-RU 20. The data model of Fig. 5 illustrates an example in which the antenna array on the transmission side in the O-RU 20 is configured by two antenna arrays of tx-array #0 and tx-array #1. The data model of Fig. 5 indicates that static-low-level-tx-endpoint #0 to static-low-level-tx-endpoint #i (i is an integer of 1 or more) constitute the tx-array #0.
Furthermore, it is indicated that static-low-level-tx-endpoint #j to static-low-level-tx-endpoint #n (j and n are integers of 1 or more, and n > j=i+1) constitute the tx-array #1. In addition, the number of antenna elements constituting the tx-array #0 and the number of antenna elements constituting the tx-array #1 may be the same or different. The tx-array #0 and the tx-array #1 may be, for example, antenna arrays having different polarization planes.

In addition, a value set to the parameter "active" in the tx-array-carrier #0 is associated with low-level-tx-endpoint #0 indicating the setting of the static-low-level-tx-endpoint #0, through the low-level-tx-link #0. Similarly, in the other static-low-level-tx-endpoint, a value set to the parameter "active" in the tx-array-carrier #n is associated with low-level-tx-endpoint #n indicating the setting of the static-low-level-tx-endpoint #n, through the low-level-tx-link #n.

In the data model of Fig. 5, in a case where some antenna elements among the plurality of antenna elements included in the O-RU 20 are operated in the energy saving mode, the O-DU 30 transitions the states of all the antenna elements constituting either the tx-array #0 or the tx-array #1 to sleeping. For example, in a case of transitioning the states of all the antenna elements constituting the tx-array #0 to sleeping, the O-DU 30 sets the value of the parameter "active" in the tx-array-carrier #0 to #i to "SLEEP".

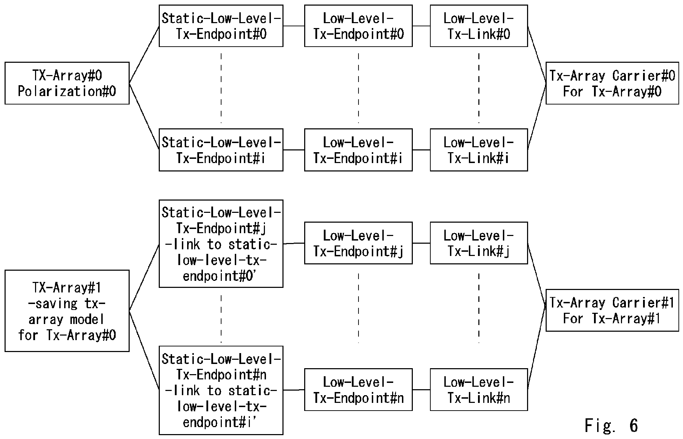

Fig. 6 illustrates another example of the data model related to the antenna array on the transmission side in the O-RU 20. The data model of Fig. 6 illustrates an example in which the antenna array on the transmission side in the O-RU 20 is configured by one antenna array of tx-array #0. The data model of Fig. 6 indicates that static-low-level-tx-endpoint #0 to static-low-level-tx-endpoint #i (i is an integer of 1 or more) constitute the tx-array #0. Here, the tx-array #1 is defined as an antenna array configured by an antenna element that operates in the energy saving mode among antenna elements corresponding to the static-low-level-tx-endpoint #0 to the static-low-level-tx-endpoint #i. In other words, a second data model corresponding to the tx-array #1 may be additionally defined (that is, separately prepared) with respect to the first data model corresponding to the tx-array #0. Further, the second data model may be transmitted from the O-DU 30 to the O-RU 20 by a message. The message may be the above-described rpc message.

For example, the tx-array #1 is configured by the static-low-level-tx-endpoint #j to the static-low-level-tx-endpoint #n. Here, any one of static-low-level-tx-endpoint #0 to static-low-level-tx-endpoint #i is associated with each of the static-low-level-tx-endpoint #j to the static-low-level-tx-endpoint #n. #0' in "link to static-low-level-tx-endpoint #0'" illustrated in Fig. 6 indicates any of static-low-level-tx-endpoint #0' to static-low-level-tx-endpoint #i. Similarly, "link to static-low-level-tx-endpoint #i' indicates any of static-low-level-tx-endpoint #0 to static-low-level-tx-endpoint #i. The static-low-level-tx-endpoint #j to the static-low-level-tx-endpoint #n may be referred to as a sub-set indicating the static-low-level-tx-endpoint included in the static-low-level-tx-endpoint #0 to the static-low-level-tx-endpoint #i.

The O-DU 30 may be notified, from O-RU 20, of the capability indicating that the static-low-level-tx-endpoints #j to #n associated as a sub-set of the static-low-level-tx-endpoints #0 to #i can be used to define the tx-array for the energy saving mode. For example, capabilities may be exchanged between the O-RU 20 and the O-DU 30 by using a hello message in a case where a NETCONF session is established.

In addition, the data model of Fig. 6 illustrates that one tx-array-carrier is associated with each antenna array (tx-array). Specifically, the tx-array-carrier #0 is associated with the low-level-tx-endpoint #0 to the low-level-tx-endpoint #i through the low-level-tx-link #0 to the low-level-tx-link #i. The tx-array-carrier #1 is associated with the low-level-tx-endpoint #j to the low-level-tx-endpoint #n through the low-level-tx-link #j to the low-level-tx-link #n. As described above, by associating the tx-array-carrier with each antenna array (tx-array), the states of all the antenna elements constituting one antenna array can be transitioned by the parameters set to one tx-array-carrier.

In the data model of Fig. 6, in a case of transitioning the O-RU 20 to the energy saving mode, the O-DU 30 may set the value of the parameter "active" to "ACTIVE" in the tx-array-carrier #0, and may set the value of "active" to "SLEEP" in the tx-array-carrier #1. As a result, among the antenna elements corresponding to the static-low-level-tx-endpoint #0 to the static-low-level-tx-endpoint #i, the states of the antenna elements associated with the static-low-level-tx-endpoint #j to the static-low-level-tx-endpoint #n can be transitioned to sleeping. Alternatively, the O-DU 30 may set the value of the parameter "active" to "SLEEP" in the tx-array-carrier #0, and further set the value of the parameter "active" to "ACTIVE" in the tx-array-carrier #1. As a result, among the antenna elements corresponding to the static-low-level-tx-endpoint #0 to the static-low-level-tx-endpoint #i, the states of the antenna elements which are not associated with the static-low-level-tx-endpoint #j to the static-low-level-tx-endpoint #n can be transitioned to sleeping.

In addition, the eAxC ID having the same value as the low-level-tx-endpoints #0 to #i associated by "link to static-low-level-tx-endpoint" may be set to the eAxC ID set from the low-level-tx-endpoint #j to the low-level-tx-endpoint #n. For example, in a case where the static-low-level-tx-endpoint #j is associated with the static-low-level-tx-endpoint #0, the same eAxC ID as that of the low-level-tx-endpoint #0 may be set to the low-level-tx-endpoint #j. As a result, it is possible to reduce the number of eAxC IDs.

Alternatively, eAxC IDs having values different from those of the low-level-tx-endpoints #0 to #i may be set to the low-level-tx-endpoints #j to #n. For example, in a case where the static-low-level-tx-endpoint #j is associated with the static-low-level-tx-endpoint #0, different eAxC IDs are set to the low-level-tx-endpoint #j and the low-level-tx-endpoint #0. At this time, the O-DU 30 may determine which eAxC ID the static-low-level-tx-endpoint associated with is used for data transmission of the C-Plane and the U-Plane. For example, it is assumed that it is determined that the static-low-level-tx-endpoint associated with the eAxC ID set to the low-level-tx-endpoint #0 is used for data transmission of the C-Plane and the U-Plane. In this case, in the tx-array-carrier #0 and the tx-array-carrier #1, the static-low-level-tx-endpoint #j can be operated in the energy saving mode even in a case where the value of the parameter "active" is not set to "SLEEP" and is left to be "ACTIVE".

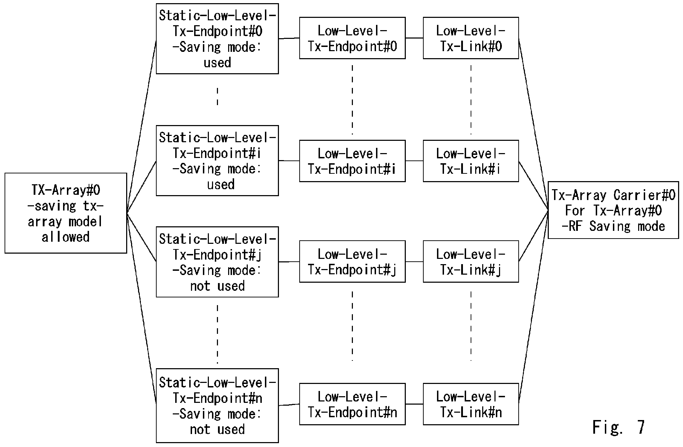

Fig. 7 illustrates still another example of the data model related to the antenna array on the transmission side in the O-RU 20. The data model of Fig. 7 illustrates an example in which the antenna array on the transmission side in the O-RU 20 is configured by one antenna array of tx-array #0. The data model of Fig. 7 indicates that static-low-level-tx-endpoint #0 to static-low-level-tx-endpoint #i (i is an integer of 1 or more) constitute the tx-array #0.

Furthermore, the parameter indicating whether or not the transition to sleeping can be performed in the energy saving mode is associated with the static-low-level-tx-endpoint #0 to the static-low-level-tx-endpoint #i. For example, the static-low-level-tx-endpoint in which the parameter "Saving mode: used" is set can transition to sleeping in the energy saving mode. On the other hand, the static-low-level-tx-endpoint in which the parameter of "Saving mode: not used" is set cannot transition to sleeping in the energy saving mode. In addition, the data model of Fig. 7 indicates that one tx-array-carrier #0 is associated with one tx-array #0 that is one antenna array.

In the data model of Fig. 7, in a case of transitioning the O-RU 20 to the energy saving mode, the O-DU 30 may set the value of the parameter "active" to "SLEEP" in the tx-array-carrier #0. At this time, the static-low-level-tx-endpoint in which the parameter of "Saving mode: not used" is set does not transition to sleeping even in a case where the value of the parameter "active" in the tx-array-carrier #0 is set to "SLEEP". That is, in a case where the value of the parameter "active" in the tx-array-carrier #0 is set to "SLEEP", only the static-low-level-tx-endpoint for which the parameter "Saving mode: used" is set transitions to sleeping. In other words, the data model set in the O-RU 20 is a single data model used in both the normal mode and the energy saving mode. Specifically, in a case where the O-RU 20 transitions to the energy saving mode, only the static-low-level-tx-endpoint in which the parameter "Saving mode: not used" in the data model is set is enabled even though the O-RU 20 is under the energy saving mode.

The O-DU 30 may be notified, from the O-RU 20, of the capability indicating that the parameter indicating whether or not the transition to sleeping can be performed in the energy saving mode can be associated with the static-low-level-tx-endpoint. For example, capabilities may be exchanged between the O-RU 20 and the O-DU 30 by using a hello message in a case where a NETCONF session is established.

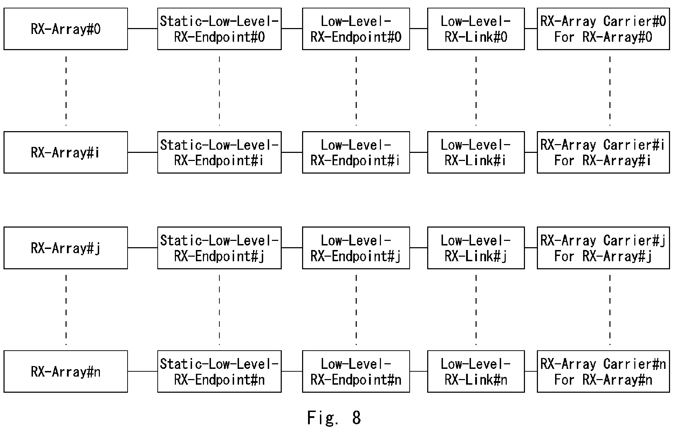

Fig. 8 illustrates a data model related to the antenna array on a reception side in the O-RU 20. The data model of Fig. 8 illustrates an example in which the antenna array on the transmission side in the O-RU 20 is configured by a plurality of antenna arrays of rx-array #0 to rx-array #n. The data model of Fig. 8 indicates that the static-low-level-rx-endpoint and the rx-array have a one-to-one correspondence.

In addition, the data model of Fig. 8 indicates that both the rx-array-carrier and the static-low-level-rx-endpoint have one-to-one correspondence.

In the data model of Fig. 8, in a case of transitioning the O-RU 20 to the energy saving mode, the O-DU 30 sets the value of the parameter "active" in the rx-array-carrier to "SLEEP" or "ACTIVE" for each antenna array. As a result, the O-DU 30 can transition to the energy saving mode for each antenna array.

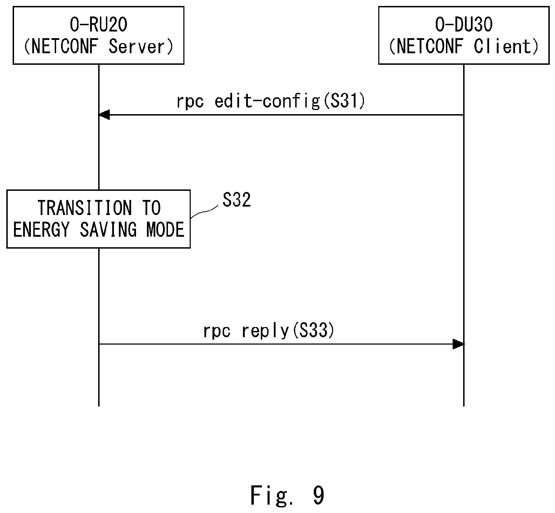

Next, a flow of processing related to edit-config included in NETCONF operations performed in the Configuration Management function according to the second example embodiment will be described with reference to Fig. 9. As illustrated in Figs. 5 to 8, the O-DU 30 updates the configuration information retrieved from the O-RU 20 to the data model indicating the antenna element to be transitioned to the energy saving mode. The O-DU 30 transmits a request message in which rpc edit-config is configured to the O-RU 20 (S31). The request message includes the data model updated in the O-DU 30.

Then, the O-RU 20 updates the state of each antenna element in accordance with the received data model (S32). The O-RU 20 transitions the state of each antenna element to the energy saving mode. For example, the O-RU 20 transitions the state of the antenna element associated with "SLEEP" to sleeping in the received data model.

Then, the O-RU 20 transmits a reply message in which rpc-reply is configured to the O-DU 30 (S33).

As described above, the O-DU 30 according to the second example embodiment can generate a data model for causing the state of the antenna element associated with the antenna array to transition to sleeping. The O-DU 30 can collectively transition the states of all the antenna elements associated with the antenna array to sleeping, or can transition the state to sleeping for each antenna element. In this manner, the O-DU 30 according to the second example embodiment can efficiently transition the O-RU 20 to the energy saving mode by flexibly selecting the antenna element to be transitioned to the sleeping in the O-RU 20.

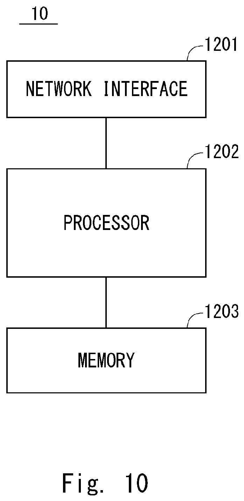

Fig. 10 is a block diagram illustrating a configuration example of the communication apparatus 10. Referring to Fig. 10, the communication apparatus 10 includes a network interface 1201, a processor 1202, and a memory 1203. The network interface 1201 is used to communicate with a network node (for example, eNB, MME, or P-GW). The network interface 1201 may include, for example, a network interface card (NIC) conforming to IEEE 802.3 series. Here, the eNB represents an evolved node B, the MME represents a mobility management entity, and the P-GW represents a packet data network gateway. IEEE represents Institute of Electrical and Electronics Engineers.

The processor 1202 executes the processing in the communication apparatus 10 described using the flowcharts in the above-described example embodiments, by reading software (computer programs) from the memory 1203 and executing the software. The processor 1202 may be, for example, a microprocessor, a micro processing unit (MPU), or a central processing unit (CPU). The processor 1202 may include a plurality of processors.

The memory 1203 is constituted by a combination of a volatile memory and a nonvolatile memory. The memory 1203 may include a storage disposed away from the processor 1202. In this case, the processor 1202 may access the memory 1203 through an input/output (I/O) interface (not shown).

In the example of Fig. 10, the memory 1203 is used to store a software module group. The processor 1202 can execute the processing in the communication apparatus 10 described in the above-described example embodiments by reading the group of software modules from the memory 1203 and executing the group of software modules.

As described with reference to Fig. 10, each of the processors included in the communication apparatus 10 and the like in the above-described example embodiments executes one or a plurality of programs including a command group for causing a computer to perform the algorithm described with reference to the drawings.

Note that the RU includes a network interface, a processor, and a memory, similar to those of the communication apparatus. In addition, the RU apparatus includes antennas for radio communication to UEs or other RU apparatuses. The antenna uses the antenna array (array antenna) as described above.

In the above-described example, the program may be stored using various types of non-transitory computer readable media and supplied to a computer. The non-transitory computer-readable media include various types of tangible storage media. Examples of the non-transitory computer-readable medium include a magnetic recording medium (for example, a flexible disk, a magnetic tape, or a hard disk drive), an optical magnetic recording medium (for example, a magneto-optical disk), a compact disc-read only memory (CD-ROM), a CD-R, a CD-R/W, and a semiconductor memory (for example, a mask ROM, a programmable ROM (PROM), an erasable PROM (EPROM), a flash ROM, or a random access memory (RAM). The program may be supplied to the computer by various types of transitory computer-readable media. Examples of the transitory computer-readable media include electrical signals, optical signals, and electromagnetic waves. The transitory computer-readable media can supply the programs to the computer via wired or wireless communication paths such as wires and optical fiber.

Note that the present disclosure is not limited to the above-described example embodiments, and can be appropriately modified without departing from the scope.

Some or all of the above-described example embodiments may be described as in the following Supplementary Notes, but are not limited to the following Supplementary Notes.

### (Supplementary Note 1)

A communication apparatus including:
a control unit that determines an antenna element that operates in an energy saving mode among a plurality of antenna elements constituting at least one antenna array in an RU apparatus; and
a communication unit that transmits, to the RU apparatus, configuration information indicating the antenna element that operates in the energy saving mode.

### (Supplementary Note 2)

The communication apparatus according to Supplementary Note 1, in which, in a case where a plurality of antenna arrays are constituted in the RU apparatus, the control unit determines all antenna elements constituting at least one antenna array among the plurality of antenna arrays, as the antenna element that operates in the energy saving mode.

### (Supplementary Note 3)

The communication apparatus according to Supplementary Note 1, in which, in a case where one antenna array is constituted in the RU apparatus, the control unit defines a sub-antenna array including at least one antenna element among a plurality of antenna elements constituting the one antenna array, and determines all antenna elements constituting the sub-antenna array, as the antenna element that operates in the energy saving mode.

### (Supplementary Note 4)

The communication apparatus according to Supplementary Note 1, in which
the control unit determines one antenna array to operate in the energy saving mode in a case where the one antenna array is constituted in the RU apparatus, and
the communication unit transmits, to the RU apparatus, the configuration information including information indicating the one antenna array that operates in the energy saving mode and information indicating whether or not each of antenna elements constituting the one antenna array operates in the energy saving mode.

### (Supplementary Note 5)

The communication apparatus according to any one of Supplementary Notes 1 to 4, in which the control unit determines a correspondence between the antenna array and the plurality of antenna elements constituting the antenna array by using configuration information that is retrieved from the RU apparatus and indicates information configured in the RU apparatus.

### (Supplementary Note 6)

The communication apparatus according to any one of Supplementary Notes 1 to 5, in which
the control unit updates configuration information that is retrieved from the RU apparatus and indicates information configured in the RU apparatus, to include information indicating the antenna element that operates in the energy saving mode, and
the communication unit transmits the updated configuration information to the RU apparatus.

### (Supplementary Note 7)

The communication apparatus according to Supplementary Note 6, in which the control unit updates the configuration information such that the plurality of antenna elements are collectively operated in the energy saving mode.

### (Supplementary Note 8)

A communication system including:
an RU apparatus having a plurality of antenna elements constituting at least one antenna array; and
a communication apparatus configured to determine an antenna element that operates in an energy saving mode among the plurality of antenna elements provided in the RU apparatus, and transmit, to the RU apparatus, configuration information indicating the antenna element that operates in the energy saving mode.

### (Supplementary Note 9)

The communication system according to Supplementary Note 8, in which, in a case where a plurality of antenna arrays are constituted in the RU apparatus, the communication apparatus determines all antenna elements constituting at least one antenna array among the plurality of antenna arrays, as the antenna element that operates in the energy saving mode.

### (Supplementary Note 10)

A communication method performed in a communication apparatus, the communication method including:
determining an antenna element that operates in an energy saving mode among a plurality of antenna elements constituting at least one antenna array in an RU apparatus; and
transmitting, to the RU apparatus, configuration information indicating the antenna element that operates in the energy saving mode.

### (Supplementary Note 11)

A program for causing a computer to execute:
determining an antenna element that operates in an energy saving mode among a plurality of antenna elements constituting at least one antenna array in an RU apparatus; and
transmitting, to the RU apparatus, configuration information indicating the antenna element that operates in the energy saving mode.

Although the invention of the present application has been described above with reference to the example embodiments, the invention of the present application is not limited to the above. Various modifications that can be understood by those skilled in the art can be made to the configuration and details of the invention of the present application within the scope of the invention.

This application claims priority based on Japanese Patent Application No. 2022-118911 filed on July 26, 2022, the entire disclosure of which is incorporated herein.

### Reference Signs List

- 10: COMMUNICATION APPARATUS
- 11: CONTROL UNIT
- 12: COMMUNICATION UNIT
- 20: O-RU
- 30: O-DU
- 40: SMO

## Claims

1. A communication apparatus comprising:
control means for determining an antenna element that operates in an energy saving mode among a plurality of antenna elements constituting at least one antenna array in an RU apparatus; and
communication means for transmitting, to the RU apparatus, configuration information indicating the antenna element that operates in the energy saving mode.

2. The communication apparatus according to claim 1, wherein, in a case where a plurality of antenna arrays are constituted in the RU apparatus, the control means determines all antenna elements constituting at least one antenna array among the plurality of antenna arrays, as the antenna element that operates in the energy saving mode.

3. The communication apparatus according to claim 1, wherein, in a case where one antenna array is constituted in the RU apparatus, the control means defines a sub-antenna array including at least one antenna element among a plurality of antenna elements constituting the one antenna array, and determines all antenna elements constituting the sub-antenna array, as the antenna element that operates in the energy saving mode.

4. The communication apparatus according to claim 1, wherein
the control means determines one antenna array to operate in the energy saving mode in a case where the one antenna array is constituted in the RU apparatus, and
the communication means transmits, to the RU apparatus, the configuration information including information indicating the one antenna array that operates in the energy saving mode and information indicating whether or not each of antenna elements constituting the one antenna array operates in the energy saving mode.

5. The communication apparatus according to any one of claims 1 to 4, wherein the control means determines a correspondence between the antenna array and the plurality of antenna elements constituting the antenna array by using configuration information that is retrieved from the RU apparatus and indicates information configured in the RU apparatus.

6. The communication apparatus according to any one of claims 1 to 4, wherein
the control means updates configuration information that is retrieved from the RU apparatus and indicates information configured in the RU apparatus, to include information indicating the antenna element that operates in the energy saving mode, and
the communication means transmits the updated configuration information to the RU apparatus.

7. The communication apparatus according to claim 6, wherein the control means updates the configuration information such that the plurality of antenna elements are collectively operated in the energy saving mode.

8. A communication system comprising:
an RU apparatus having a plurality of antenna elements constituting at least one antenna array; and
a communication apparatus configured to determine an antenna element that operates in an energy saving mode among the plurality of antenna elements provided in the RU apparatus, and transmit, to the RU apparatus, configuration information indicating the antenna element that operates in the energy saving mode.

9. The communication system according to claim 8, wherein, in a case where a plurality of antenna arrays are constituted in the RU apparatus, the communication apparatus determines all antenna elements constituting at least one antenna array among the plurality of antenna arrays, as the antenna element that operates in the energy saving mode.

10. A communication method performed in a communication apparatus, the communication method comprising:
determining an antenna element that operates in an energy saving mode among a plurality of antenna elements constituting at least one antenna array in an RU apparatus; and
transmitting, to the RU apparatus, configuration information indicating the antenna element that operates in the energy saving mode.

11. A non-transitory computer-readable medium storing a program for causing a computer to execute:
determining an antenna element that operates in an energy saving mode among a plurality of antenna elements constituting at least one antenna array in an RU apparatus; and
transmitting, to the RU apparatus, configuration information indicating the antenna element that operates in the energy saving mode.
